# EUROPEAN PATENT SPECIFICATION

(11) **EP 2 228 265 B1**
(45) Date of publication and mention of the grant of the patent: **03.10.2012**
(21) Application number: 10156126.4
(22) Date of filing: 10.03.2010
(51) Int. Cl.: B60R 19/18

(54) **Mounting assembly of a fascia to a vehicle**
Montage einer Verkleidung an einem Fahrzeug
Assemblage d'une peau de véhicule à un véhicule

(30) Priority: 13.03.2009 GB 0904354
(43) Date of publication of application: 15.09.2010
(73) Proprietor: Nissan Motor Manufacturing (UK) Ltd., Bedford Bedfordshire MK43 0DB (GB)
(72) Inventor: Champaneri, Bhavesh, Bedford, Bedfordshire MK43 0DB (GB)

(56) References cited:
- EP-A1- 1 312 512
- EP-A1- 1 712 422
- WO-A1-96/08393
- DE-A1- 19 738 491
- DE-A1-102006 015 399
- FR-A1- 2 789 964
- US-A1- 2004 224 099

## Description

This invention relates to vehicle bumpers, and in particular, but not exclusively, to a vehicle bumper fascia having a locating feature to assist accurate location of the bumper fascia during assembly onto the vehicle body.

Generally speaking, vehicles are provided with bumpers in order to minimise damage to the vehicle, the vehicle occupants, and pedestrians in the event of a collision. The bumper is designed to operate differently depending on the type of impact. For example in the event of a low speed "bump" the bumper is designed to minimise the damage to the vehicle by deforming elastically. Conversely, in the event of a high speed collision, the bumper is designed to protect the vehicle occupants by collapsing in a controlled manner.

In order to minimise the repair costs associated with replacing the bumper after a collision, vehicle bumpers are not typically integral with the vehicle body. Accordingly the bumper is usually formed from an outward facing bumper fascia which covers a bumper beam and an energy absorbing member. The fascia and the bumper beam are attached to the vehicle body during assembly of the vehicle.

Typically, the bumper fascia is mounted onto a bracket which is fixed to the vehicle body. The accuracy of the positioning of the fascia during assembly is crucial in achieving the required quality of fit between the bumper fascia and the adjoining vehicle structures such as the headlight assemblies, fenders, grille and bonnet.

At present the fascia is often positioned accurately in the vertical direction, by virtue of the need to support the weight of the fascia on the body. Likewise, in the longitudinal, fore-aft direction, the fascia is typically retained against the bracket at a fixed location.

An example prior art is given in WO 96/08393 A1.

However, locating the fascia in the transverse direction is done by eye during the process of fixing the bumper to the vehicle body. This leaves room for error and the potential for inconsistent or even unacceptable gaps between the bumper and its adjoining panels. This is because a degree of compliance between the fascia and the body in the transverse direction is required in order to mount the fascia onto the body and fasten the bumper to the fenders.

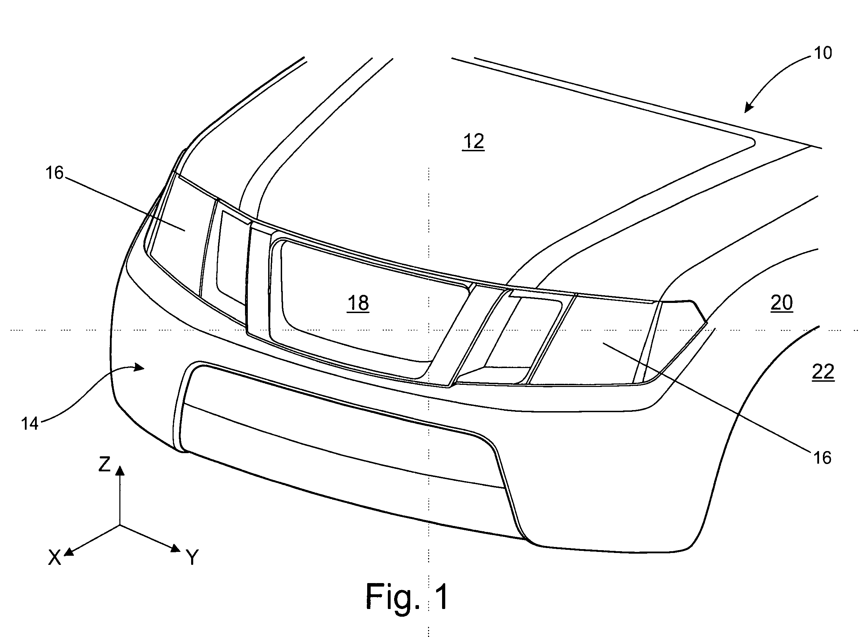

Throughout the following description and claims, the nomenclature longitudinal, transverse and vertical are used as indicated in Figure 1, and defined thus:

The transverse direction refers to the lateral axis of the vehicle, perpendicular to the direction of travel of the vehicle and substantially parallel with the bumper beam.

The longitudinal direction refers to the fore-aft axis or to a direction substantially aligned to that axis and parallel with the direction of travel of the vehicle.

The vertical direction refers to the axis lying substantially perpendicular to the transverse and longitudinal axes.

The terms forward and rearward are used in respect of the longitudinal axis and are aligned with a forward and rearward direction of travel of the vehicle.

It is an object of the present invention to at least mitigate some of the above problems.

Aspects of the invention provide an apparatus as claimed in the appended claims.

According to another aspect of the present invention there is provided an apparatus for mounting a fascia to a vehicle, the apparatus comprising: a first retainer disposed on one of the fascia or the vehicle; a second retainer disposed on the other of the fascia or the vehicle; a first tapered aperture associated with the second retainer; and a second tapered aperture associated with the first retainer,
wherein the first retainer is arranged to co-operate with the first tapered aperture to locate the fascia in a pre-determined position in a first and second direction relative to the vehicle; and wherein the second retainer is arranged to co-operate with the second tapered aperture to locate the fascia in a pre-determined position in a third direction relative to the vehicle.

Advantageously, the present invention provides for at least one degree of freedom between the fascia and the vehicle during the assembly of the fascia to the vehicle whilst guiding the fascia to a desired location relative to the vehicle once the assembly is complete. For example, a degree of movement in the lateral direction means that the fascia can be manoeuvred into position on the vehicle assembly line ready for securing to the vehicle and fastening to the fenders. This means that the bumper fascia does not need to be exactly aligned to the vehicle before the process of screw fastening or clipping to the fenders and body can begin. As long as the fasteners can be located in the body and fenders then the fastening process can begin.

In addition, the elimination of movement in the transverse direction in the rearward position means that the quality of the fit lines and panel gaps between the fascia and the adjacent body panels and other sub-assemblies such as headlight assemblies can be improved.

In an example, the first retainer and the second tapered aperture are located on the fascia and, wherein the first tapered aperture and the second retainer are located on the vehicle.

In an example, the first retainer and the second tapered aperture are located on the vehicle and, wherein the first tapered aperture and the second retainer are located on the fascia.

In an example, the first retainer and the second tapered aperture are integrally formed with the fascia.

In an example, the first tapered aperture and the second retainer are integrally formed into a unitary mount bracket arranged to secure the fascia to the vehicle.

In an example, the mount bracket comprises mounting means associated with a headlight assembly for a vehicle.

In an example, the mount bracket comprises mounting means associated with a body panel for a vehicle.

In an example, the first tapered aperture and the second retainer are integrally formed with the fascia.

In an example, the first retainer and the second tapered aperture are integrally formed into a unitary mount bracket arranged to secure the fascia to the vehicle.

In an example, the mount bracket comprises mounting means associated with a headlight assembly for a vehicle.

In an example, the mount bracket comprises mounting means associated with a body panel for a vehicle.

In an example, the first tapered aperture is arranged to engage the first retainer and the second retainer comprises a clip feature integrally formed in the mount bracket.

In an example, the rearward edge of the aperture is substantially the same width as the clip so that the clip positions the fascia in the transverse direction.

In a further aspect of the present invention, there is provided a method of mounting a fascia onto a vehicle, the method including the steps of: providing a bumper fascia having a flange with locating means for engaging the vehicle, moving the bumper fascia into a forward position relative to the vehicle in which the bumper fascia is supported on the vehicle but remains movable in the transverse direction, moving the fascia into a rearward position relative to the vehicle in which the bumper fascia is fixed on the vehicle and is substantially immovable in the transverse direction.
Within the scope of this application it is envisaged that the various aspects, embodiments, examples, features and alternatives set out in the preceding paragraphs, in the claims and/or in the following description and drawings may be taken individually or in any combination thereof.

The invention will now be described, by way of example only, and with reference to the following drawings in which:
Figure 1 is a perspective view of a front of a vehicle including a bumper fascia of the present invention;
Figure 2 is a front perspective view of the bumper fascia of Figure 1 during assembly onto a mount bracket on the vehicle body;
Figure 3a is a detailed perspective view of a rear face of the bumper fascia of Figure 1 showing a flange on the bumper fascia and Figure 3b shows an rear perspective view of the fascia and mount bracket as shown in Figure 2;
Figure 4 is a detailed rear perspective view of a rear face of the fascia and mount bracket of Figure 3b once the fascia has been assembled to the vehicle via the mount bracket;
Figure 5 is a plan view of the mounting bracket and bumper fascia of Figure 4;

Turning initially to Figure 1, a front of a vehicle 10 is shown having a hood or bonnet 12 and a bumper assembly indicated generally at 14. Positioned between the bonnet 12 and the bumper assembly 14 are headlight assemblies 16 and grille 18. A fender 20 surrounds a wheel arch 22 and abuts the bonnet 12 at an upper edge and the bumper assembly 14 at a front edge. The bonnet 12, bumper assembly 14, headlight assemblies 16, grille 18, fenders 20 and wheel arches 22 are mounted on a vehicle body 24 not shown in Figure 1 for clarity.

Also shown in Figure 1 is a Cartesian co-ordinate marker for reference. In the example shown in Figure 1, X is parallel with the longitudinal axis of the vehicle, Y is parallel with the lateral axis of the vehicle and Z is parallel with the vertical axis of the vehicle.

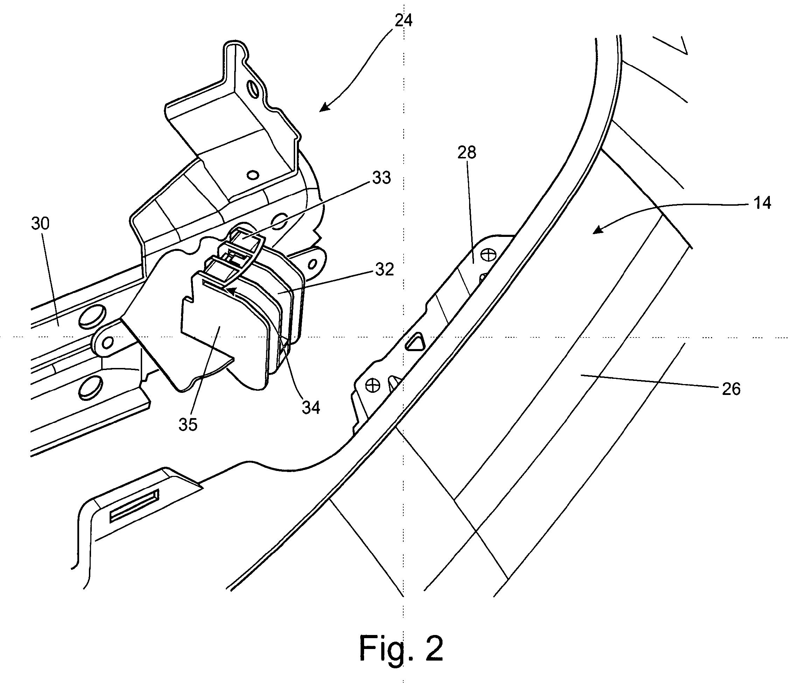

In Figure 2, the front of the vehicle 10 is shown in more detail with the vehicle body structure indicated generally at 24. The bumper assembly 14 is shown distanced from the vehicle body structure 24 as it would be during assembly of the front end of the vehicle 10. The bumper 14 is formed from a bumper fascia 26 which forms the outward facing portion of the bumper 14 and an energy absorber and bumper beam mounted on the rear of the bumper fascia 26 and which are not shown for clarity. Positioned on the rear face of the bumper fascia 26 is a retainer or retaining flange 28 for mounting the bumper fascia 26 onto the vehicle as will be described in more detail shortly.

The vehicle body structure 24 includes a radiator support panel or front transverse member 30 which carries a mount bracket 32. The mount bracket 32 has an upper lip 33 and a main body 35 which together define an aperture or channel 34. The bracket 32 allows the bumper fascia 26 to attach to the vehicle body structure 24 by way of the channel 34 which receives the flange 28 as will be described in more detail shortly.

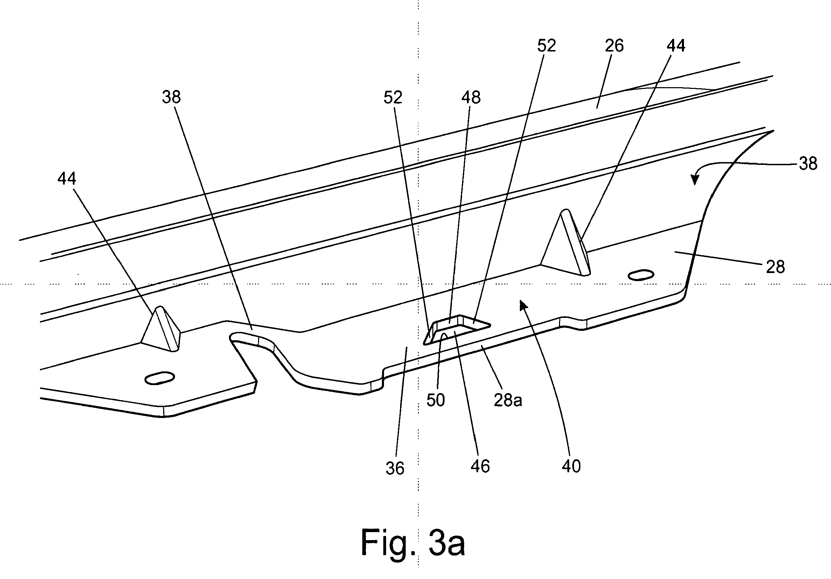

Turning now to Figure 3a, the flange 28 is shown in more detail having a transverse base section 36 positioned between upwardly extending sections 38 to form a valley indicated generally at 40. The transverse base section 36 and upwardly extending sections 38 are located on the back of the bumper fascia 26, which is strengthened by a series of buttresses 44. Positioned centrally on the transverse base section 36 is a second aperture 46 whose sides taper to form a trapezium shape. The aperture 46 has a front wall 48 and a wider back wall 50. Extending between the front wall 48 and a back wall 50 are angled side walls 52.

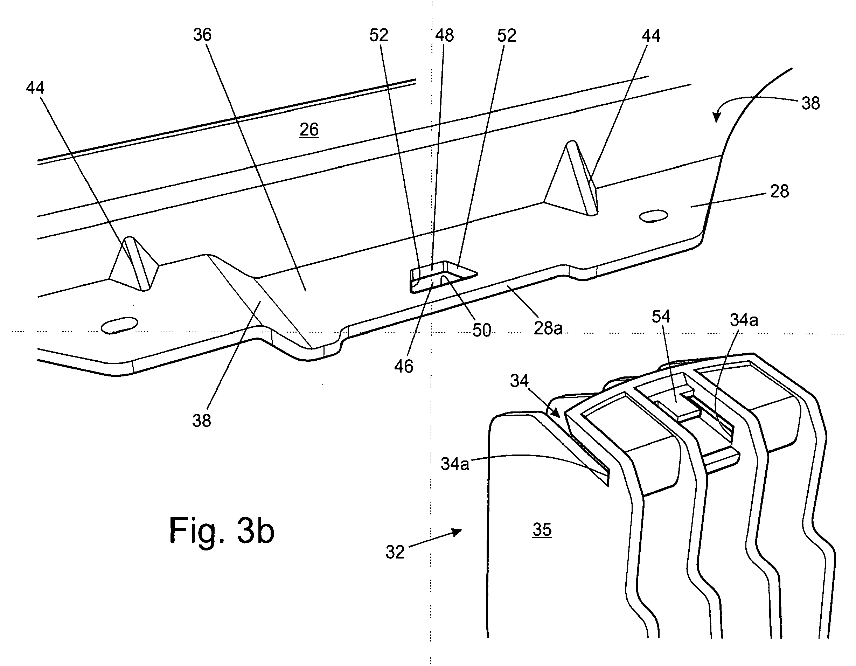

Figure 3b shows the flange 28 of Figure 3a being positioned relative to the mount bracket 32 prior to final assembly of the fascia 26 to the vehicle 10. The flange 28 defines a first retainer arranged to co-operate with the channel 34 of the mount bracket 32 which defines a first tapered aperture.

To assemble the fascia 26 to the vehicle 10, the flange 28 is aligned with the channel 34 by the assembly operator and then the fascia 26 is moved towards the vehicle 10 until the flange 28 engages the channel 34. The arrangement of the channel 34 and the flange 28 in the example shown in the Figures is configured to initially prescribe the vertical position of the fascia 26 relative to the vehicle 10 during assembly.

As the flange 28 is moved further into the channel 34, a second retainer in the form of a clip 54 integrated into the mount bracket 32, engages with a second tapered aperture in the form of aperture 46 formed in the flange 28. The aperture 46 is configured such that the wider back wall 50 is arranged to engage with the clip 54 first during assembly.

The wider back wall 50 is wider than the clip 54 to facilitate easy engagement by the assembly operator of the clip 54 with the aperture 46 during assembly. The assembly operator continues to move the fascia 26 towards the vehicle 10 until the rearmost edge 28a of the flange 28 abuts a back wall 34a of the channel 34. This abutment serves to limit the longitudinal displacement of the fascia 26 with respect to the vehicle 10. During this movement the vertical position of the fascia 26 is guided to a desired location relative to the vehicle 10 by the co-operation between the flange 28 and the tapered aperture of the channel 34.

As the clip 54 moves forward within the aperture 46, the sides of the clip 54 may contact one or other of the angled side walls 52 of the aperture 46. These angled side walls 52 taper towards the front wall 48 which is arranged to be substantially the same width as the clip 54. This co-operation between the clip 54 and the angled side walls 52, guide the fascia 26 towards the desired lateral position relative to the vehicle which is achieved when the clip 54 abuts the front wall 48 of the aperture 46. The clip 54 is fully engaged to secure the fascia 26 when the clip 54 abuts the front wall 48 of the aperture 46.

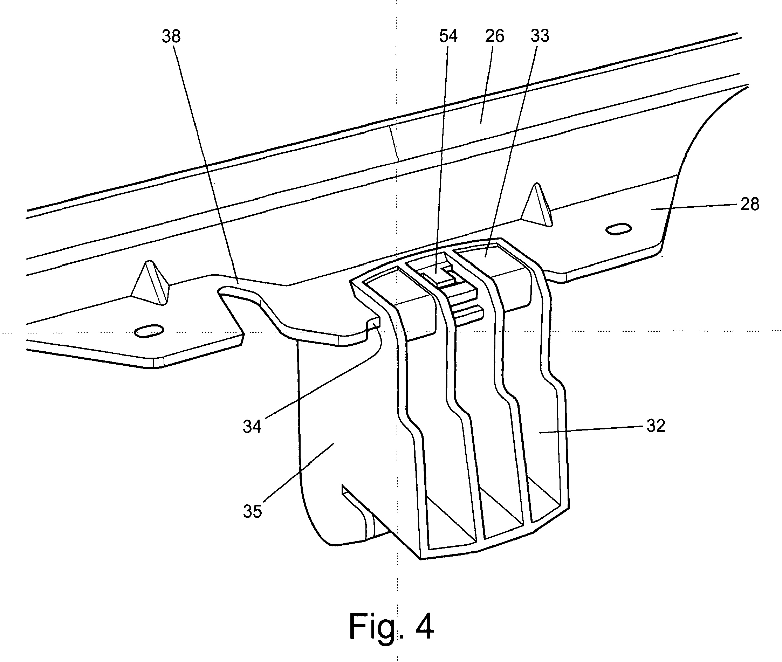

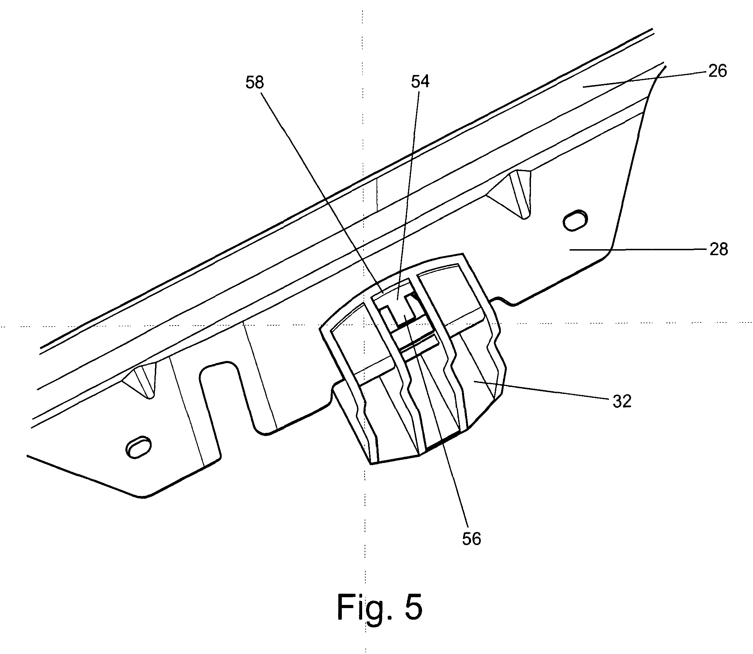

Turning to Figures 4 and 5, the bumper fascia 26 is shown having been mounted onto the vehicle body 24 (not shown) via the mount bracket 32. The flange 28 has been inserted into the channel 34 of the mount bracket 32 thereby enclosing the aperture 46 in the channel 34. The upper lip 33 of the mount bracket 32 defines securing means in the form of a resiliently deformable clip 54 which clips into the aperture 46 when the flange 28 is introduced into the channel 34. The clip 54 has a rear surface 56 which is movable in the vertical direction so as to resiliently spring into the aperture 46 upon insertion of the flange 28 into the channel 34.

With the bumper fascia 26 in a rearward position as shown in Figure 5, the rear surface 56 of clip 54 is spaced from the back wall 50 of the aperture 46 and the front surface 58 of the clip 54 is abutting the front wall 48 of the aperture 46. Since the front surface 58 of the clip 54 is the same width as the front wall 48 of the aperture 46, the bumper fascia 26 is retained in the transverse direction with respect to the vehicle body 24. This rearward position represents a fully engaged position of the bumper fascia 26 on the vehicle body 24. At this point in the assembly process the screw fixings (not shown for clarity) would have been applied thereby fixing the fascia 26 to the vehicle body 24, the fenders 20 and the other surrounding components.

However, in advance of the fixings being applied on the assembly line, the bumper fascia 26 is retained on the vehicle body in a forward position (not shown). In this position the front surface 58 of the clip 54 is situated approximately in the middle of the aperture 46. The rear surface 56 of the clip 54 abuts the back wall 50 of the aperture 46. In this position the bumper fascia 26 is able to move transversely with respect to the vehicle body, albeit only to the extent that the clip 54 can move in the aperture 46. However, this limited movement is all that is needed to provide sufficient play between the components to allow the screw fixings to be located.

As the fixings are tightened so the front wall 48 of the aperture 46 is brought towards the front surface 58 of the clip 54. If the bumper fascia 26 and vehicle body 24 are not perfectly transversely aligned, then one of the side walls 52 of the aperture engages the front surface 58 of the clip 54 and in doing so guides the bumper fascia 26 toward the fully engaged position shown in Figure 5.

In this way the shape of the aperture 46 permits initial installation of the bumper fascia 26 onto the vehicle body 24 so as to allow insertion of the screw fixings, but additionally automatically positions the bumper fascia 26 relative to the vehicle body 24 in the transverse direction upon tightening of the fixings.

It will be appreciated that the securing means between the bumper fascia and the mount bracket may be reversed. In this case, the clip feature is provided by a clip feature integral with the bumper fascia arranged to engage a trapezium shaped aperture formed in the mount bracket.

Other advantages will be apparent to one skilled in the art and the present examples and embodiments are to be considered illustrative and not restrictive.

## Claims

1. An apparatus for mounting a fascia (26) to a vehicle (10), the apparatus comprising:
a first retainer (28) disposed on one of the fascia (26) or the vehicle (10); a second retainer (54) disposed on the other of the fascia (26) or the vehicle (10); a first tapered aperture (34) associated with the second retainer (54); and a second tapered aperture (46) associated with the first retainer (28),
wherein the first retainer (28) is arranged to co-operate with the first tapered aperture (34) to locate the fascia (26) in a pre-determined position in a first and a second direction relative to the vehicle (10); and
wherein the second retainer (54) is arranged to co-operate with the second tapered aperture (46) to locate the fascia (26) in a pre-determined position in a third direction relative to the vehicle (10).

2. An apparatus according to claim 1, wherein the first retainer (28) and the second tapered aperture (46) are located on the fascia (26), and the first tapered aperture (34) and the second retainer (54) are located on the vehicle (10).

3. An apparatus according to claim 1, wherein the first retainer (28) and the second tapered aperture (46) are located on the vehicle (10), and the first tapered aperture (34) and the second retainer (54) are located on the fascia (26).

4. An apparatus according to claim 2, wherein the first retainer (28) and the second tapered aperture (46) are integrally formed with the fascia (26).

5. An apparatus according to claim 2, wherein the first tapered aperture (34) and the second retainer (54) are integrally formed into a unitary mount bracket (32) arranged to secure the fascia (26) to the vehicle (10).

6. An apparatus according to claim 5, wherein the first tapered aperture (34) is arranged to engage the first retainer (28), and the second retainer (54) comprises a clip feature integrally formed in the mount bracket (32).

7. An apparatus according to claim 5 or claim 6, wherein the mount bracket (32) comprises mounting means associated with a headlight assembly (16) for a vehicle (10).

8. An apparatus according to any of claim 5 to claim 7, wherein the mount bracket (32) comprises mounting means associated with a body panel (20) for a vehicle (10).

9. An apparatus according to claim 3, wherein the first tapered aperture (34) and the second retainer (54) are integrally formed with the fascia (26).

10. An apparatus according to claim 3, wherein the first retainer (28) and the second tapered aperture (46) are integrally formed into a unitary mount bracket (32) arranged to secure the fascia (26) to the vehicle (10).

11. An apparatus according to claim 10, wherein the mount bracket (32) comprises mounting means associated with a headlight assembly (16) for a vehicle (10).

12. An apparatus according to claim 10 or claim 11, wherein the mount bracket (32) comprises mounting means associated with a body panel (20) for a vehicle (10).

13. An apparatus according to any preceding claim, wherein the fascia (26) is a bumper fascia.

14. A vehicle (10) comprising an apparatus according to any of the preceding claims.

## Patentansprüche

1. Vorrichtung zum Anbauen einer Verkleidung (26) an einem Fahrzeug (10), wobei die Vorrichtung Folgendes umfasst:
eine erste Halterung (28), die an einem von der Verkleidung (26) oder dem Fahrzeug (10) angeordnet ist;
eine zweite Halterung (54), die an dem anderen von der Verkleidung (26) oder dem Fahrzeug (10) angeordnet ist;
eine mit der zweiten Halterung (54) assoziierte erste verjüngte Öffnung (34); und
eine mit der ersten Halterung (28) assoziierte zweite verjüngte Öffnung (46),
wobei die erste Halterung (28) dazu angeordnet ist, mit der ersten verjüngten Öffnung (34) zusammenzuwirken, um die Verkleidung (26) in einer vorherbestimmten Position in einer ersten und einer zweiten Richtung relativ zu dem Fahrzeug (10) zu platzieren; und
wobei die zweite Halterung (54) dazu angeordnet ist, mit der zweiten verjüngten Öffnung (46) zusammenzuwirken, um die Verkleidung (26) in einer vorherbestimmten Position in einer dritten Richtung relativ zu dem Fahrzeug (10) zu platzieren.

2. Vorrichtung nach Anspruch 1, wobei sich die erste Halterung (28) und die zweite verjüngte Öffnung (46) an der Verkleidung (26) befinden und sich die erste verjüngte Öffnung (34) und die zweite Halterung (54) an dem Fahrzeug (10) befinden.

3. Vorrichtung nach Anspruch 1, wobei sich die erste Halterung (28) und die zweite verjüngte Öffnung (46) an dem Fahrzeug (10) befinden und sich die erste verjüngte Öffnung (34) und die zweite Halterung (54) an der Verkleidung (26) befinden.

4. Vorrichtung nach Anspruch 2, wobei die erste Halterung (28) und die zweite verjüngte Öffnung (46) integral mit der Verkleidung (26) ausgebildet sind.

5. Vorrichtung nach Anspruch 2, wobei die erste verjüngte Öffnung (34) und die zweite Halterung (54) integral als ein einstückiges Anbauteil (32) ausgebildet sind, das dazu angeordnet ist, die Verkleidung (26) an dem Fahrzeug (10) zu befestigen.

6. Vorrichtung nach Anspruch 5, wobei die erste verjüngte Öffnung (34) dazu angeordnet ist, mit der ersten Halterung (28) in Eingriff zu treten und die zweite Halterung (54) ein Clipmerkmal umfasst, das integral in dem Anbauteil (32) ausgebildet ist.

7. Vorrichtung nach Anspruch 5 oder Anspruch 6, wobei das Anbauteil (32) Anbaumittel umfasst, die mit einer Scheinwerferbaugruppe (16) für ein Fahrzeug (10) assoziiert sind.

8. Vorrichtung nach Anspruch 5 oder Anspruch 7, wobei das Anbauteil (32) Anbaumittel umfasst, die mit einem Karosserieblech (20) für ein Fahrzeug (10) assoziiert sind.

9. Vorrichtung nach Anspruch 3, wobei die erste verjüngte Öffnung (34) und die zweite Halterung (54) integral mit der Verkleidung (26) ausgebildet sind.

10. Vorrichtung nach Anspruch 3, wobei die erste Halterung (28) und die zweite verjüngte Öffnung (46) integral als ein einstückiges Anbauteil (32) ausgebildet sind, das dazu angeordnet ist, die Verkleidung (26) an dem Fahrzeug (10) zu befestigen.

11. Vorrichtung nach Anspruch 10, wobei das Anbauteil (32) Anbaumittel umfasst, die mit einer Scheinwerferbaugruppe (16) für ein Fahrzeug (10) assoziiert sind.

12. Vorrichtung nach Anspruch 10 oder Anspruch 11, wobei das Anbauteil (32) Anbaumittel umfasst, die mit einem Karosserieblech (20) für ein Fahrzeug (10) assoziiert sind.

13. Vorrichtung nach einem der vorangehenden Ansprüche, wobei es sich bei der Verkleidung (26) um eine Stoßfängerverkleidung handelt.

14. Fahrzeug (10), umfassend eine Vorrichtung nach einem der vorangehenden Ansprüche.

## Revendications

1. Appareil pour monter un fascia (26) sur un véhicule (10), l'appareil comprenant :
un premier dispositif de retenue (28) disposé sur l'un du fascia (26) ou du véhicule (10) ;
un second dispositif de retenue (54) disposé sur l'autre du fascia (26) ou du véhicule (10) ;
une première ouverture conique (34) associée au second dispositif de retenue (54) ; et
une seconde ouverture conique (46) associée au premier dispositif de retenue (28),
dans lequel le premier dispositif de retenue (28) est agencé pour coopérer avec la première ouverture conique (34) afin de positionner le fascia (26) à une position prédéterminée dans un premier et un deuxième sens par rapport au véhicule (10) ; et
dans lequel le second dispositif de retenue (54) est agencé pour coopérer avec la seconde ouverture conique (46) afin de positionner le fascia (26) à une position prédéterminée dans un troisième sens par rapport au véhicule (10).

2. Appareil selon la revendication 1, dans lequel le premier dispositif de retenue (28) et la seconde ouverture conique (46) sont situés sur le fascia (26), et la première ouverture conique (34) et le second dispositif de retenue (54) sont situés sur le véhicule (10).

3. Appareil selon la revendication 1, dans lequel le premier dispositif de retenue (28) et la seconde ouverture conique (46) sont situés sur le véhicule (10), et la première ouverture conique (34) et le second dispositif de retenue (54) sont situés sur le fascia (26).

4. Appareil selon la revendication 2, dans lequel le premier dispositif de retenue (28) et la seconde ouverture conique (46) font partie intégrante du fascia (26).

5. Appareil selon la revendication 2, dans lequel la première ouverture conique (34) et le second dispositif de retenue (54) font partie intégrante d'un support de montage unitaire (32) agencé pour fixer le fascia (26) au véhicule (10).

6. Appareil selon la revendication 5, dans lequel la première ouverture conique (34) est agencée pour s'engager avec le premier dispositif de retenue (28), et le second dispositif de retenue (54) comprend un élément de clip faisant partie intégrante du support de montage (32).

7. Appareil selon la revendication 5 ou la revendication 6, dans lequel le support de montage (32) comprend un moyen de montage associé à un ensemble de phares (15) d'un véhicule (10).

8. Appareil selon l'une quelconque des revendications 5 à 7, dans lequel le support de montage (32) comprend un moyen de montage associé à un panneau de carrosserie (20) d'un véhicule (10).

9. Appareil selon la revendication 3, dans lequel la première ouverture conique (34) et le second dispositif de retenue (54) font partie intégrante du fascia (26).

10. Appareil selon la revendication 3, dans lequel le premier dispositif de retenue (28) et la seconde ouverture conique (46) font partie intégrante d'un support de montage unitaire (32) agencé pour fixer le fascia (26) au véhicule (10).

11. Appareil selon la revendication 10, dans lequel le support de montage (32) comprend un moyen de montage associé à un ensemble de phares (16) d'un véhicule (10).

12. Appareil selon la revendication 10 ou la revendication 11, dans lequel le support de montage (32) comprend un moyen de montage associé à un panneau de carrosserie (20) d'un véhicule (10).

13. Appareil selon l'une quelconque des revendications précédentes, dans lequel le fascia (26) est un fascia de pare-chocs.

14. Véhicule (10) comprenant un appareil selon l'une quelconque des revendications précédentes.
